# EUROPEAN PATENT SPECIFICATION

(11) **EP 3 641 579 B1**
(45) Date of publication and mention of the grant of the patent: **31.07.2024**
(21) Application number: 18740303.5
(22) Date of filing: 18.06.2018
(51) Int. Cl.: A43B 1/00, A43B 3/00, A43B 13/12, A43B 13/22, B29D 35/14, B32B 9/02, B32B 9/04, B32B 27/40, B32B 7/12, B32B 27/08, B32B 27/28, B32B 27/36

(54) **SHOE WITH ABRASION RESISTANT LEATHER OUTSOLE, ABRASION RESISTANT LEATHER OUTSOLE AND PROCESSES FOR PRODUCING THEM**
SCHUH MIT ABRIEBFESTER LEDERAUSSSENSOHLE, ABRIEBFESTE LEDERAUSSENSOHLE UND HERSTELLUNGSVERFAHREN DAFÜR
CHAUSSURE DOTÉE D'UNE SEMELLE D'USURE EN CUIR RÉSISTANTE À L'ABRASION ET SES PROCÉDÉS DE PRODUCTION

(30) Priority: 19.06.2017 IT 201700067598
(43) Date of publication of application: 29.04.2020
(73) Proprietor: FAIT PLAST S.p.A., 25060 Cellatica (Prov. of Brescia) (IT)
(72) Inventor: ARICI, Guido, 25060 Cellatica (BS) (IT)
(74) Representative: Bottero, Carlo
(86) International application number: PCT/IB2018/054455
(87) International publication number: WO 2018/234966

(56) References cited:
- EP-A1- 2 510 817
- DE-A1- 2 340 015
- DE-A1- 3 709 440
- GB-A- 2 521 466
- US-A1- 2009 044 432
- US-A1- 2010 288 435
- US-A1- 2016 007 678

## Description

The present invention relates to a shoe with an abrasion resistant leather outsole, an abrasion resistant leather outsole and the relative manufacturing processes.

Leather shoes, in particular shoes having a leather sole, generally are a very widespread and utilized type of shoe. Leather soles indeed are soft, breathing, and make shoes very comfortable to wear. Leather is also perceived as a material having greater quality and prestige with respect to rubber or other synthetic materials with which soles for a shoe may be made.

However, when used to make the outsole of a shoe, leather has the drawback of being a slippery material (it does not have much grip on the ground) and subject to quick wear.

To obviate this drawback, in the state of the art it is known to apply one or more reinforcing elements of rubber or other polymeric material (e.g. polyurethane) capable of increasing the friction on the ground and the abrasion resistance of the sole, to the surface of the outsole intended to come into contact with the ground.

However, the aforesaid reinforcing elements (so-called rubberized sole, half soles, toe caps, heel taps, etc.) generally have an increased thickness and alter the appearance of the shoe in a significant manner.

One example of a shoe made non-slip and abrasion resistant by means of the application of reinforcing elements made of a thermoplastic polyurethane-based polymeric material is described in GB 2521466. The reinforcing elements described in this document are obtained by means of injection moulding of the thermoplastic polyurethane and are glued to the leather sole by means of adhesive composition.

DE 2340015 A1 describes a children's shoe with a leather sole having non-slip properties. These properties are conferred on the sole by an appropriately shaped element in polyurethane material, which is joined to the sole by means of a glue.

US 2010/288435 A1 describes a laminate usable as a constituent component of a shoe sole, in particular a sole for sports shoes. The laminate comprises two layers, one of which can be made of leather and the other can be made of TPU.

US 2009/044432 A1 describes a shoe having an outer sole made of leather to which a plurality of ground contact bodies containing a TPU are attached to form a grid.

EP 2510817 A1 describes a shoe having a cork or regenerated leather outsole on which a film of a wear-resistant material is applied. The film can be applied by depositing a thermosetting polymer composition in the liquid state, e.g. a paint based on a polyurethane polymer or in the form of a pre-extruded film. The pre-extruded film can be a polyolefin film, for example a polyethylene or polypropylene film.

Although it is a possible solution to the problem of the friction and the wear from abrasion, in the case of *haute couture* shoes for example, it is desirable that the current reinforcing elements made of rubber or other material be replaced by alternative technical solutions. In the case of *haute couture* shoes (but not only for this kind of shoes), in fact, it is also required for the surface of the sole intended to come into contact with the ground to have a pleasant appearance and for such aesthetical features to remain unaltered over time to the greatest extent possible. For example, it is desirable for the shoe to have coloured leather soles or to have graphic elements (e.g. brands, logos, drawings, etc.), which are to remain visible also after a prolonged use of the shoes.

In the case of *haute couture* shoes, alternatively to the use of reinforcing elements, the problem of the slipperiness and wear of leather soles is also resolved by conveniently refining the leather sheets from which the soles are made at the end of the hide tanning process.

The finishing operations of the leather sheets generally provide at least one step of applying one or more coating substances (e.g. coating) on one or both the surfaces of the sheet to cover or mask the surface defects (e.g. holes, recesses, scratches, etc.) and obtain a surface as homogenous as possible. After the coating, the sheets are subjected to at least one painting step, generally spray painting, by means of which a layer of coloured protective coating is deposited onto the surface of the sole intended to come into contact with the ground during use, giving it a given level of abrasion resistance, friction capability to surfaces and waterproofing.

However, the aforesaid finishing operations of the leather sheets complicate the production process of the soles and shoes, lengthening the overall production times and increasing the costs thereof. Moreover, the soles that are made non-slip and/or abrasion resistant by means of the aforesaid finishing operations of the leather are characterized by modest performance. In particular, the abrasion resistance is not sufficient to meet the duration standards required for *haute couture* shoes. For example, the wear resistance of these soles, which is measured according to Standard ISO 20871:2001, generally is in the range of 5,000 to 10,000 steps or fewer, while the desired value is of at least 25,000 steps.

Moreover, since the aforesaid finishing operations use chemical compositions containing volatile substances (e.g. solvents for painting), the production process of the soles has a non-negligible environmental impact.

In consideration of the aforesaid state of the art, the Applicant has set as primary objective to provide a shoe having a leather outsole provided with high abrasion - and therefore wear - resistance.

Within the scope of such primary objective, a first object of the present invention is to give a leather outsole the aforesaid wear resistance without this involving a significant alteration of the aesthetical appearance of the shoe.

It is a second object of the present invention to give a leather outsole the aforesaid wear resistance while at the same time keeping the original aspect of the leather outsole substantially unaltered, when required or desired.

It is a third object of the present invention to give a leather outsole the aforesaid wear resistance while at the same time providing the possibility of colouring or imparting further aesthetical decorations to the sole.

It is a fourth object of the present invention to provide a manufacturing method of the leather sheets for the production of outsoles for shoes that is simpler and quicker to make with respect to the processes of the prior art.

The Applicant has now found that these and other objects, which will become more apparent in the following description, are achieved by a shoe comprising at least one leather outsole according to the independent claim 1; a leather outsole for a shoe according to the appended claim 6; a leather sheet suitable for the production of a shoe outsole according to the appended claim 7; a process for producing a leather sheet according to the independent claim 8 and a method for producing a shoe according to the independent claim 10.

It has been unexpectedly indeed observed that by applying a film of the aforesaid polymeric material, also of very low thickness (e.g. less than 1 mm), it is possible to give a leather sole a very high wear resistance and also adequate non-slip and aesthetical properties capable of meeting even the strictest standards established in the footwear sector.

The reduced thickness of the film provides the advantage of substantially leaving unaltered the original aesthetical appearance of the leather sole, or the aesthetical appearance in any case imparted to the leather by the manufacturer thereof in the design and production step of the shoe. However the overall weight of the shoe is not substantially altered by the presence of the polymeric film.

The film may also be prepared in coloured form or may be printed and/or decorated on at least one face so as to visibly show a graphic element or text. Preferably, the film is printed and/or decorated on the face intended to face the sole to be coated so that the graphic element is not exposed to wear due to contact with the ground. The present invention therefore significantly broadens the possibility of the aesthetical appearance of a shoe to be enhanced by the manufacturer thereof.

The coating film according to the present invention may easily be applied to the leather, for example through a hot rolling process, at moderate temperatures and pressures, when the film is thermoadhesive, or through a process of application at room temperature with the aid of an adhesive composition (glue), thus in both cases significantly simplifying the processing process of the leather for soles.

The coating film according to the present invention may also be applied to the leather sheets, alternatively to the finishing operations carried out according to the known technique (e.g. painting), so as to obtain leather sheets provided with abrasion resistance and non-slip properties from which to then cut out the soles in the desired shapes and sizes.

The present invention thus provides the advantage of freeing the production process of a shoe and the production process of the soles from the tanning-finishing process of the leather. Moreover, the present invention is suitable for being implemented in all three of the aforesaid processes.

The process for preparing the leather sheets according to the present invention also has a reduced environmental impact with respect to the finishing processes of the prior art, because it does not provide painting operations or the use of products containing volatile solvents or water. Moreover, in consideration of the increased properties of abrasion - and therefore also wear - resistance that may be obtained, the present invention provides the additional advantage of allowing the use of a tanned leather of lesser quality as starting material for manufacturing soles for a shoe.

According to a first aspect, the present invention therefore relates to a shoe comprising at least one leather outsole, said outsole being at least partly coupled with at least one abrasion resistant coating film comprising at least a first layer of a polymeric material comprising at least one thermoplastic polyurethane according to claim 1

Preferably, the aforesaid at least one thermoplastic polyurethane is selected from: polyester-based thermoplastic polyurethane, polyether-based thermoplastic polyurethane and mixtures thereof.

According to a second aspect, the present invention relates to a leather outsole for a shoe, said sole being at least partly coupled with an abrasion resistant coating film comprising at least a first layer of a polymeric material comprising at least one thermoplastic polyurethane according to the appended claim 6.

According to a third aspect, the present invention relates to leather sheet, in particular for the production of an abrasion resistant outsole for a shoe comprising at least a first surface and at least a second surface opposite to said first surface, said first surface being at least partly coupled with an abrasion resistant coating film comprising at least a first layer of a polymeric material comprising at least one thermoplastic polyurethane according to the appended claim 7.

According to a fourth aspect, the present invention relates to a process for producing a leather sheet, in particular suitable for the production of an outsole for a shoe, comprising the steps of:
a) providing at least one leather sheet having at least a first surface and at least a second surface opposite to said first surface;
b) coupling at least one abrasion resistant coating film with at least one portion of said first surface of said leather sheet, according to the appending claim 8.

According to a further aspect, the present invention relates to a method for producing a shoe comprising an abrasion resistant leather outsole, said method comprising the step of assembling at least one upper and at least one leather outsole to form said shoe, said leather outsole being at least partly coupled with at least one abrasion resistant coating film comprising at least a first layer of a polymeric material comprising at least one thermoplastic polyurethane according to the appending claim 10.

For the purposes of the present description and of the appended claims, the verb "comprise" and the terms originating therefrom also include the verb "essentially consist of" and "consist" and also the terms originating therefrom.

The limits and numeric ranges expressed in the present description and in the appended claims also include the numeric value or numeric values mentioned. Moreover, all the values and sub-ranges of a limit or numeric range are to be intended specifically included as though they were specifically mentioned.

Preferably, the abrasion resistant sole according to the present invention has a value of abrasion resistance lower than or equal to 400 mm³, measured according to Standard ISO 20871:2001.

According to the present invention, a multilayer coating film is used to give the leather sole the necessary wear resistance, the film comprising at least one layer of a polymeric material comprising at least one thermoplastic polyurethane. The aforesaid coating film is also indicated as "abrasion resistant film" below.

In a preferred embodiment, said layer of a polymeric material comprising at least one thermoplastic polyurethane is a film essentially consisting of a thermoplastic polyurethane.

The abrasion resistant film or layer is obtained from a polymeric composition comprising at least one thermoplastic polyurethane. The composition may optionally contain smaller quantities of other polymers, in addition to conventional additives.

The thermoplastic polyurethanes (TPUs) are known in the state of the art. Typically, the TPUs are block copolymers having hard segments and soft segments. The TPUs may be produced by means of reactions of polyaddition of organic di- or polyisocyanates, linear polyols and diols having low molecular weight (chain extenders), possibly in the presence of catalysts. The TPUs may be produced in the shape of flexible films.

In one preferred embodiment of the present invention, the TPU is a polyester-based thermoplastic polyurethane.

The coating films comprising at least one layer of polyester-based TPU provide a particularly high abrasion resistance.

For the purposes of the present invention, a "polyester-based thermoplastic polyurethane" is a thermoplastic polyurethane containing at least two ester groups and/or is a thermoplastic polyurethane formed from polyols which include polyester bonds.

Polyester polyols that may be used for the preparation of polyester-based TPUs are known in the state of the art and may be obtained for example, by reaction of a dicarboxylic acid (e.g. adipic acid, succinic acid, phthalic acid, etc.) and a glycol or polyol having at least one primary hydroxyl group (e.g. ethylene glycol, butylene glycol, hexanediol, etc.).

In a second preferred embodiment of the present invention, the TPU is a polyether-based thermoplastic polyurethane.

The coating films comprising at least one layer of polyether-based TPU provide a particularly high resistance to hydrolysis and therefore in addition to adequate abrasion resistance, are particularly suitable for giving the soles also a high waterproofing.

For the purposes of the present invention, a "polyether-based thermoplastic polyurethane" is a thermoplastic polyurethane containing at least two ether groups and/or is a thermoplastic polyurethane formed from polyols which include polyether bonds.

Polyether polyols that may be used for the preparation of polyester-based TPUs are known in the state of the art. Examples of polyether polyols are: polyethyleneglycol (PEG), polypropylene oxide (PPO), polypropylene glycol (PPG), polytetramethylene glycol.

The isocyanates that may be used for the preparation of TPUs preferably are selected from aliphatic isocyanates, aromatic isocyanates or mixtures thereof. The isocyanates may comprise two or more isocyanic groups, preferably from 2 to 4 groups. The isocyanates may comprise repetitive units consisting of monomers containing one or more additive functional groups (e.g. groups OH- or NH₂-) which serve to give particular properties to the final urethane polymer, and therefore to improve the application performance thereof.

The abrasion resistant film contains at least three layers joined together (multilayer film).

The thermoplastic polyurethane film may be prepared by means of extrusion techniques known in the state of the art, from a solid thermoplastic polymer in granular form. The film may also be prepared by means of the coating technique, from the solid thermoplastic polymer or from dispersions of polymer in organic solvent or water.

According to the invention, the abrasion resistant film has an overall thickness in the range of 60-1000 micrometers, preferably in the range of 100-600 micrometers, more preferably in the range of 120-350 micrometers.

According to the invention, the abrasion resistant film is a thermoadhesive film.

For the purposes of the present invention, by the term "thermoadhesive film" is meant a film that may be made to adhere to a leather surface by putting it into contact with the surface and providing heat and exerting a pressure on the surface of the film.

In one preferred embodiment, the abrasion resistant film comprises at least one printed graphic element, such as an image, text, drawing, pattern or colour. The graphic element may be printed with the known techniques of the state of the art to decorate thermoplastic films, such as digital printing, flexo printing, rotogravure printing, ink-jet printing, screen printing, etc.

Preferably, the abrasion resistant film bears the graphic element on the face intended to face towards the surface of the leather sole to be coated.

According to the invention, the abrasion resistant film comprises at least a first layer comprising at least one thermoplastic polyurethane (abrasion resistant layer) and at least a second layer of a thermoadhesive polymeric material (thermoadhesive layer) coupled to said first layer. In the application step of the abrasion resistant film to the leather surface to be protected from wear, said thermoadhesive layer is applied in such a manner as to be facing towards the surface of the leather sole to be coated.

According to the invention, the aforesaid multilayer film also comprises a third layer of a polymeric material comprising at least one graphic element (decorative layer). Preferably, the decorative layer is interposed between said first layer and said second layer. When the abrasion resistant film also comprises a decorative layer, the abrasion resistant layer preferably is transparent so as not to alter the aesthetical appearance of the decorative layer.

Polymeric films that may be used as thermoadhesive layers in the present invention are for example, polyurethane, copolyester, copolyamide, ethyl-vinyl acetate film.

Polymeric films that are used as intermediate decorative layers are polyurethane films that are obtained by coating an aqueous dispersion of polyester-/polycarbonate-based or polyether-/polycarbonate-based polyurethane. The decoration on the intermediate decorative layer may also be obtained by means of oligomeric UV printing, flexo printing and similar techniques.

The polymeric films that may be used as thermoadhesive and decorative layers may be produced with the techniques known in the state of the art.

To facilitate the handling of the abrasion resistant coating film, it may also comprise an outer layer formed by a removable film (carrier) such as for example, a polyethylene terephthalate (PET) film, polyethylene, paper etc.

The multilayer abrasion resistant films may be made with the techniques known to a person skilled in the art. For example, the different layers forming the abrasion resistant film may be co-extruded together one on top of the other or may be produced separately and then rolled one on top of the other (for example, by means of calendering) .

The abrasion resistant film may be coupled to the leather sole for example, after it has been cut out from a leather sheet in the desired shapes and sizes.

The abrasion resistant film may be coupled over the whole surface of the sole or only on selected portions, for example on the portions of surface intended to come into contact with a ground.

According to another embodiment, the abrasion resistant film is coupled to the leather sheet, for example substantially over the whole surface thereof. The sheet thus coated may then be cut out to obtain the sole of desired shape and size.

The coupling of a thermoadhesive abrasion resistant film may be carried out by hot laminating said film onto the leather surface to which the desired properties of wear resistance are to be imparted. For such purpose for example, the thermoadhesive surface of the abrasion resistant film may be put into contact with the surface of the leather to be coated and then heat may be provided to cause the two surfaces to adhere to each other. Preferably, the heating is accompanied by the application of a pressure to promote the adhesion of the film to the leather.

Preferably, the heating temperature is in the range of 60-300°C and more preferably, in the range of 100-200°C.

Preferably, the pressure applied is in the range of 1-100 atm and more preferably, in the range of 2-20 atm.

The lamination may be carried out by means of a calender or by means of a hot plates press system.

Alternatively, the coating film may be coupled at room temperature, that is without providing heat, onto the leather surface by means of an adhesive composition and by applying a pressure. Examples of adhesive compositions that may be used for the purposes of the present invention are: glues of polyurethane, chloroprene, polyester, isocyanic nature.

Advantageously, the surface of the leather may be optionally pre-treated with a primer before the application of the abrasion resistant film. For such purpose, primers known to the person skilled in the art may be used such as for example, low viscosity polyurethane primers. The primer promotes the consolidation of the surface of the leather, avoiding the peeling thereof and therefore the delamination of the abrasion resistant film.

According to the present invention, it is possible to make substantially all types of shoes in which at least one leather outsole is used, such as shoes, sandals, boots, slippers, etc. Wear resistance soles according to the present invention may be assembled at the shoe upper according to the techniques known to the person skilled in the art, for example by means of gluing or sewing.

The abrasion resistant films according to the present invention provide the advantage of increasing the waterproofing of the leather sole, that can be measured for example according to Standard UNI EN ISO 5404:2012. This effect is particularly apparent in the abrasion resistant films comprising polyether-based TPU film.

Preferably, the abrasion resistant sole according to the present invention has a dynamic waterproofing value equal to or higher than 30 minutes, measured according to Standard UNI EN ISO 5404:2012.

Preferably, the abrasion resistant sole according to the present invention has a resistance value to walking in water equal to or higher than 25,000 steps, preferably equal to or higher than 40,000, measured according to the procedure described in the examples.

The following examples are provided to further illustrate the present invention.

### Preparation of the abrasion resistant film

A multilayer abrasion resistant film according to the present invention was prepared in the following manner.

A full coloured decorative layer formed by an aqueous dispersion of black polyester-polycarbonate polyurethane (thickness 30 micrometers) was deposited, by means of coating, on one face of a polyether-based (abrasion resistant layer) thermoplastic polyurethane film (melting point 155 °C; thickness 200 micrometers) . A thermoadhesive film consisting of a hot melt glue of polyester type (melting point of about 110°C; thickness 80 micrometers) was applied, by means of hot pressing, on the face of the abrasion resistant layer opposite to the one in contact with the decorative layer. A carrier formed by a PET film (thickness 23 micrometers) was applied on the face of the decorative layer not engaged with the abrasion resistant layer.

Therefore, the abrasion resistant film consisted of the following sequence of layers: carrier/decorative layer/abrasion resistant layer/thermoadhesive layer. The multilayer abrasion resistant film was prepared in shape of a tape having sizes 20 cm x 30 m.

The abrasion resistant film was applied to a leather sheet that was pre-treated according to the known technique. The pretreatment was carried out by applying a coating resin (filler resin) on the surface of the leather. Then, an aqueous-based polyurethane primer (about 7 g (dry)/m²) was sprayed onto the surface treated with the resin.

Then the abrasion resistant film was applied on the surface treated with the primer, by means of pressing (pressure 6 bar, temperature 150°C, duration 30 seconds). The carrier was removed at the end of the pressing.

A sole was cut out from the leather sheet coated on the surface with the abrasion resistant film.

According to the prior art, a second leather sheet coated with the same coating resin was painted so as to obtain a comparative abrasion resistant sole.

The two soles were joined to respective shoe uppers to form two women's city shoes.

The soles were subjected to the following tests:
TEST no. 1 - abrasion resistance according to Standard ISO 20871:2001;
TEST no. 2 - dynamic waterproofing (penetration and absorption time) according to Standard UNI EN ISO 5404:2012;
TEST no. 3 - walking resistance using Walkmeter (bending angle: + 28°; abutment angle: -10°; load applied: 50 kg; speed: 25 steps/min.; test temperature: 23°C; results after 50,000 steps).

The test results are shown in Table 1.

**Table 1**

| | | Sole of invention | Sole for comparative purposes | Acceptability threshold value |
|---|---|---|---|---|
| TEST 1 | Resistance Abrasion (mm³) | 205 | 466 | ≤ 400 |
| TEST 2 | Dynamic waterproofing (minutes) | > 30 | 10 | ≥ 30 |
| | Water absorption (% weight) | 1.4 | 4.4 | ≤ 25 |
| TEST 3 | Resistance to walking in water (no. of steps) | >50,000 | <25,000 | >25,000 |

The test results highlight that the shoes having the leather soles modified according to the present invention have excellent abrasion resistance properties, also in water. The abrasion resistance of the soles according to the present invention is significantly greater than the one of the leather soles treated according to the state of the art.

The abrasion resistant film according to the present invention also gives the leather sole greater properties of waterproofing than the ones of the leather treated according to the prior art.

The sole according to the invention passes all assessment tests, contrary to the comparative sole, which does not pass the dynamic waterproofing and resistance to walking in water tests.

## Claims

1. Shoe comprising at least one leather outsole, said outsole being at least partly coupled with an abrasion resistant coating film comprising:
at least a first layer of a polymeric material comprising at least one thermoplastic polyurethane;
at least a second layer of a thermoadhesive polymeric material coupled to said first layer, said second layer being facing towards said outsole;
at least a third layer of a polymeric material obtained by coating an aqueous dispersion of polyester-/polycarbonate-based or polyether-/polycarbonate-based polyurethane;
wherein said coating film has a thickness in the range of 60 - 1000 micrometers.

2. Shoe according to claim 1, wherein said at least one thermoplastic polyurethane is selected from: polyester-based thermoplastic polyurethane, polyether-based thermoplastic polyurethane and mixtures thereof.

3. Shoe according to claim 1, wherein said coating film comprises at least one graphic element.

4. Shoe according to claim 1, wherein said third layer comprises at least one graphic element.

5. Shoe according to claim 4, wherein said third layer is interposed between said first layer and said second layer.

6. Leather outsole for a shoe, said outsole being at least partly coupled with an abrasion resistant coating film comprising:
at least a first layer of a polymeric material comprising at least one thermoplastic polyurethane;
at least a second layer of a thermoadhesive polymeric material coupled to said first layer, said second layer being facing towards said outsole;
at least a third layer of a polymeric material obtained by coating an aqueous dispersion of polyester-/polycarbonate-based or polyether-/polycarbonate-based polyurethane;
wherein said coating film has a thickness in the range of 60 - 1000 micrometers.

7. Leather sheet suitable for the production of a shoe outsole comprising at least a first surface and at least a second surface opposite to said first surface, said first surface being at least partly coupled with an abrasion resistant coating film comprising:
at least a first layer of a polymeric material comprising at least one thermoplastic polyurethane;
at least a second layer of a thermoadhesive polymeric material coupled to said first layer, said second layer being facing towards said leather sheet;
at least a third layer of a polymeric material obtained by coating an aqueous dispersion of polyester-/polycarbonate-based or polyether-/polycarbonate-based polyurethane;
wherein said coating film has a thickness in the range of 60 - 1000 micrometers.

8. Process for producing a leather sheet, suitable for the production of an outsole for a shoe, comprising the steps of:
a) providing at least one leather sheet having at least a first surface and at least a second surface opposite to said first surface;
b) coupling at least one abrasion resistant coating film with at least one portion of said first surface of said leather sheet, wherein said abrasion resistant coating film comprises:
at least a first layer of a polymeric material comprising at least one thermoplastic polyurethane;
at least a second layer of a thermoadhesive polymeric material coupled to said first layer, said second layer being facing towards said first surface of said leather sheet;
at least a third layer of a polymeric material obtained by coating an aqueous dispersion of polyester-/polycarbonate-based or polyether-/polycarbonate-based polyurethane;
wherein said coating film has a thickness in the range of 60 - 1000 micrometers.

9. Process for producing a leather sheet according to the preceding claim, wherein said step (b) comprises:
- placing said coating film in contact with said portion of said first surface of said leather sheet;
- heating at least said coating film for coupling said film with said first surface of said leather sheet.

10. Method for producing a shoe comprising the step of assembling at least one upper and at least one leather outsole to form said shoe, said outsole being at least partly coupled with at least one coating film comprising:
at least a first layer of a polymeric material comprising at least one thermoplastic polyurethane;
at least a second layer of a thermoadhesive polymeric material coupled to said first layer, said second layer being facing towards said outsole;
at least a third layer of a polymeric material obtained by coating an aqueous dispersion of polyester-/polycarbonate-based or polyether-/polycarbonate-based polyurethane;
wherein said coating film has a thickness in the range of 60 - 1000 micrometers.

## Patentansprüche

1. Schuh, umfassend mindestens eine Lederaußensohle, wobei die Außensohle mindestens teilweise mit einem abriebfesten Beschichtungsfilm gekoppelt ist, umfassend:
mindestens eine erste Schicht aus einem polymeren Material, das mindestens ein thermoplastisches Polyurethan umfasst;
mindestens eine zweite Schicht aus einem thermoadhäsiven Polymermaterial, die an die erste Schicht gekoppelt ist, wobei die zweite Schicht der Außensohle zugewandt ist;
mindestens eine dritte Schicht aus einem polymeren Material, das durch Beschichten einer wässrigen Dispersion von Polyurethan auf Polyester-/Polycarbonat-Basis oder Polyether-/Polycarbonat-Basis erhalten ist;
wobei der Beschichtungsfilm eine Dicke im Bereich von 60 - 1000 Mikrometern aufweist.

2. Schuh nach Anspruch 1, wobei das mindestens eine thermoplastische Polyurethan ausgewählt ist aus: thermoplastischem Polyurethan auf Polyesterbasis, thermoplastischem Polyurethan auf Polyetherbasis und Mischungen davon.

3. Schuh nach Anspruch 1, wobei der Beschichtungsfilm mindestens ein grafisches Element umfasst.

4. Schuh nach Anspruch 1, wobei die dritte Schicht mindestens ein grafisches Element umfasst.

5. Schuh nach Anspruch 4, wobei die dritte Schicht zwischen der ersten Schicht und der zweiten Schicht angeordnet ist.

6. Lederaußensohle für einen Schuh, wobei die Außensohle zumindest teilweise mit einem abriebfesten Beschichtungsfilm gekoppelt ist, umfassend:
mindestens eine erste Schicht aus einem polymeren Material, das mindestens ein thermoplastisches Polyurethan umfasst;
mindestens eine zweite Schicht aus einem thermoadhäsiven Polymermaterial, die an die erste Schicht gekoppelt ist, wobei die zweite Schicht der Außensohle zugewandt ist;
mindestens eine dritte Schicht aus einem polymeren Material, das durch Beschichten einer wässrigen Dispersion von Polyurethan auf Polyester-/Polycarbonat-Basis oder Polyether-/Polycarbonat-Basis erhalten ist;
wobei der Beschichtungsfilm eine Dicke im Bereich von 60 - 1000 Mikrometern aufweist.

7. Lederbahn, die für die Herstellung einer Schuh-Außensohle geeignet ist, umfassend mindestens eine erste Oberfläche und mindestens eine zweite Oberfläche, die der ersten Oberfläche gegenüberliegt, wobei die erste Oberfläche mindestens teilweise mit einem abriebfesten Beschichtungsfilm gekoppelt ist, umfassend:
mindestens eine erste Schicht aus einem polymeren Material, das mindestens ein thermoplastisches Polyurethan umfasst;
mindestens eine zweite Schicht aus einem thermoadhäsiven Polymermaterial, die an die erste Schicht gekoppelt ist, wobei die zweite Schicht der Lederbahn zugewandt ist; mindestens eine dritte Schicht aus einem polymeren Material, das durch Beschichten einer wässrigen Dispersion von Polyurethan auf Polyester-/Polycarbonat-Basis oder Polyether-/Polycarbonat-Basis erhalten ist;
wobei der Beschichtungsfilm eine Dicke im Bereich von 60 - 1000 Mikrometern aufweist.

8. Verfahren zum Herstellen einer Lederbahn, die zur Herstellung einer Außensohle für einen Schuh geeignet ist, umfassend die Schritte von:
a) Bereitstellen mindestens einer Lederbahn, aufweisend mindestens eine erste Oberfläche und mindestens eine zweite Oberfläche, die der ersten Oberfläche gegenüberliegt;
b) Koppeln mindestens eines abriebfesten Beschichtungsfilms mit mindestens einem Abschnitt der ersten Oberfläche der Lederbahn, wobei der abriebfeste Beschichtungsfilm Folgendes umfasst:
mindestens eine erste Schicht aus einem polymeren Material, das mindestens ein thermoplastisches Polyurethan umfasst;
mindestens eine zweite Schicht aus einem thermoadhäsiven Polymermaterial, die an die erste Schicht gekoppelt ist, wobei die zweite Schicht der ersten Oberfläche der Lederbahn zugewandt ist;
mindestens eine dritte Schicht aus einem polymeren Material, das durch Beschichten einer wässrigen Dispersion von Polyurethan auf Polyester-/Polycarbonat-Basis oder Polyether-/Polycarbonat-Basis erhalten ist;
wobei der Beschichtungsfilm eine Dicke im Bereich von 60 - 1000 Mikrometern aufweist.

9. Verfahren zum Herstellen einer Lederbahn nach dem vorhergehenden Anspruch, wobei der Schritt (b) umfasst:
- Platzieren des Beschichtungsfilms in Kontakt mit dem Abschnitt der ersten Oberfläche der Lederbahn;
- Erwärmen mindestens des Beschichtungsfilms zum Koppeln des Films mit der ersten Oberfläche der Lederbahn.

10. Verfahren zum Herstellen eines Schuhs, umfassend den Schritt des Zusammenfügens mindestens eines Obermaterials und mindestens einer Lederaußensohle, um den Schuh zu bilden, wobei die Außensohle mindestens teilweise mit mindestens einer Beschichtungsfolie gekoppelt ist, umfassend:
mindestens eine erste Schicht aus einem polymeren Material, das mindestens ein thermoplastisches Polyurethan umfasst;
mindestens eine zweite Schicht aus einem thermoadhäsiven Polymermaterial, die an die erste Schicht gekoppelt ist, wobei die zweite Schicht der Außensohle zugewandt ist;
mindestens eine dritte Schicht aus einem polymeren Material, das durch Beschichten einer wässrigen Dispersion von Polyurethan auf Polyester-/Polycarbonat-Basis oder Polyether-/Polycarbonat-Basis erhalten ist;
wobei der Beschichtungsfilm eine Dicke im Bereich von 60 - 1000 Mikrometern aufweist.

## Revendications

1. Chaussure comprenant au moins une semelle extérieure en cuir, ladite semelle extérieure étant au moins partiellement couplée à un film de revêtement résistant à l'abrasion comprenant:
au moins une première couche d'un matériau polymère comprenant au moins un polyuréthane thermoplastique;
au moins une deuxième couche d'un matériau polymère thermoadhésif couplée à ladite première couche, ladite deuxième couche étant orientée vers ladite semelle extérieure;
au moins une troisième couche d'un matériau polymère obtenu par enduction d'une dispersion aqueuse de polyuréthane à base de polyester/polycarbonate ou de polyéther/polycarbonate;
dans laquelle ledit film de revêtement a une épaisseur comprise entre 60 et 1000 micromètres.

2. Chaussure selon la revendication 1, dans laquelle ledit au moins un polyuréthane thermoplastique est choisi parmi les polyuréthanes thermoplastiques à base de polyester, les polyuréthanes thermoplastiques à base de polyéther et leurs mélanges.

3. Chaussure selon la revendication 1, dans laquelle ledit film de revêtement comprend au moins un élément graphique.

4. Chaussure selon la revendication 1, dans laquelle ladite troisième couche comprend au moins un élément graphique.

5. Chaussure selon la revendication 4, dans laquelle ladite troisième couche est interposée entre ladite première et ladite deuxième couche.

6. Semelle extérieure en cuir pour une chaussure, ladite semelle extérieure étant au moins partiellement couplée à un film de revêtement résistant à l'abrasion comprenant:
au moins une première couche d'un matériau polymère comprenant au moins un polyuréthane thermoplastique;
au moins une deuxième couche d'un matériau polymère thermoadhésif couplée à ladite première couche, ladite deuxième couche étant orientée vers ladite semelle extérieure;
au moins une troisième couche d'un matériau polymère obtenu par enduction d'une dispersion aqueuse de polyuréthane à base de polyester/polycarbonate ou de polyéther/polycarbonate;
dans laquelle ledit film de revêtement a une épaisseur comprise entre 60 et 1000 micromètres.

7. Feuille de cuir adaptée à la production d'une semelle extérieure de chaussure, comprenant au moins une première surface et au moins une deuxième surface opposée à ladite première surface, ladite première surface étant au moins partiellement couplée à un film de revêtement résistant à l'abrasion comprenant:
au moins une première couche d'un matériau polymère comprenant au moins un polyuréthane thermoplastique;
au moins une deuxième couche d'un matériau polymère thermoadhésif couplée à ladite première couche, ladite deuxième couche étant orientée vers ladite feuille de cuir;
au moins une troisième couche d'un matériau polymère obtenu par enduction d'une dispersion aqueuse de polyuréthane à base de polyester/polycarbonate ou de polyéther/polycarbonate;
dans laquelle ledit film de revêtement a une épaisseur comprise entre 60 et 1000 micromètres.

8. Procédé de fabrication d'une feuille de cuir, adapté pour la fabrication d'une semelle extérieure pour une chaussure, comprenant les étapes suivantes:
a) fournir au moins une feuille de cuir ayant au moins une première surface et au moins une deuxième surface opposée à ladite première surface;
b) coupler au moins un film de revêtement résistant à l'abrasion avec au moins une partie de ladite première surface de ladite feuille de cuir, dans lequel ledit film de revêtement résistant à l'abrasion comprend:
au moins une première couche d'un matériau polymère comprenant au moins un polyuréthane thermoplastique;
au moins une deuxième couche d'un matériau polymère thermoadhésif couplée à ladite première couche, ladite deuxième couche étant orientée vers ladite première surface de ladite feuille de cuir;
au moins une troisième couche d'un matériau polymère obtenu par enduction d'une dispersion aqueuse de polyuréthane à base de polyester/polycarbonate ou de polyéther/polycarbonate;
dans laquelle ledit film de revêtement a une épaisseur comprise entre 60 et 1000 micromètres.

9. Procédé de fabrication d'une feuille de cuir selon la revendication précédente, dans lequel ladite étape (b) comprend:
- le placement dudit film de revêtement en contact avec ladite partie de ladite première surface de ladite feuille de cuir;
- le chauffage dudit au moins film de revêtement pour le coupler à ladite première surface de ladite feuille de cuir.

10. Procédé de fabrication d'une chaussure comprenant l'étape d'assemblage d'au moins une tige et d'au moins une semelle extérieure en cuir pour former ladite chaussure, ladite semelle extérieure étant au moins partiellement couplée à au moins un film de revêtement comprenant:
au moins une première couche d'un matériau polymère comprenant au moins un polyuréthane thermoplastique;
au moins une deuxième couche d'un matériau polymère thermoadhésif couplée à ladite première couche, ladite deuxième couche étant orientée vers ladite semelle extérieure;
au moins une troisième couche d'un matériau polymère obtenu par enduction d'une dispersion aqueuse de polyuréthane à base de polyester/polycarbonate ou de polyéther/polycarbonate;
dans laquelle ledit film de revêtement a une épaisseur comprise entre 60 et 1000 micromètres.
